# EUROPÄISCHE PATENTANMELDUNG

(11) **EP 2 148 192 A2**
(43) Veröffentlichungstag der Anmeldung: **27.01.2010**
(21) Anmeldenummer: 09100285.7
(22) Anmeldetag: 18.05.2009
(51) Int. Cl.: G01N 27/407

(54) **Sensorelement mit rissfreiem Grenzstromabgleich**

(30) Priorität: 25.07.2008 DE 102008040731
(71) Anmelder: ROBERT BOSCH GMBH, 70442 Stuttgart (DE)
(72) Erfinder: Runge, Henrico, 70435, Stuttgart (DE)

(57) **Zusammenfassung**

Die Erfindung betrifft ein Sensorelement (110) zur Bestimmung mindestens einer physikalischen Eigenschaft eines Gases in einem Messgasraum (112), insbesondere zur Bestimmung einer Sauerstoffkonzentration in einem Abgas. Das Sensorelement (110) umfasst mindestens eine erste Elektrode (114) und mindestens eine zweite Elektrode (116) und mindestens einen die erste Elektrode (114) und die zweite Elektrode (116) verbindenden Festelektrolyten (120). Die zweite Elektrode (116) ist im Inneren des Sensorelements (110) angeordnet und über mindestens ein Gaszutrittsloch (144) und mindestens eine Diffusiorisbarriere (146) mit Gas aus dem Messgasraum (112) beaufschlagbar. Auf der Diffusionsbarriere (146) ist zumindest bereichsweise eine zumindest teilweise gasundurchlässige Abdeckschicht (148) vorgesehen. Das Gaszutrittsloch (144) weist im Bereich der Abdeckschicht (148) zumindest eine Anfasung (158) auf.

## Beschreibung

### Stand der Technik

Die Erfindung geht aus von bekannten Sensorelementen, welche auf elektrolytischen Eigenschaften bestimmter Festkörper beruhen, also der Festfähigkeit dieser Festkörper, bestimmte Ionen zu leiten. Derartige Sensorelemente werden insbesondere im Kraftfahrzeugbereich eingesetzt, um Luft-Kraftstoff-Gasgemischzusammensetzungen zu messen. In diesem Fall werden diese Sensorelemente auch als "Lambdasonden" bezeichnet und spielen eine wesentliche Rolle bei der Reduzierung von Schadstoffen in Abgasen, sowohl in Ottomotoren als auch in der Dieseltechnologie.

Derartige Sensorelemente sind mittlerweile in zahlreichen verschiedenen Ausführungsformen bekannt. Die vorliegende Erfindung ist grundsätzlich auf die meisten dieser bekannten Ausführungsformen anwendbar. Ein besonderer Schwerpunkt der vorliegenden Erfindung, auf welche die Erfindung jedoch nicht beschränkt ist, soll auf so genannten Proportionalsonden oder Breitbandsonden liegen, bei welchen eine Gasgemischzusammensetzung beispielsweise über einen durch den Festelektrolyten fließenden Strom bestimmt wird.

Bei vielen derartiger Sensorelementen spielt ein Abgleich der Sensorelemente nach der Herstellung eine wesentliche Rolle. Dieser Abgleich dient beispielsweise dem Ausgleich von Fertigungstoleranzen und bezweckt eine Einstellung fest vorgegebener elektrischer Eigenschaften der Sensorelemente.

Ein Ausführungsbeispiel eines derartigen abgleichbaren Sensorelements, welches im Rahmen der vorliegenden Erfindung eingesetzt werden kann bzw. welches erfindungsgemäß modifiziert werden kann, ist in DE 103 45 141 A1 beschrieben. Diese Schrift offenbart ein Sensorelement, bei welchem eine erste, außenliegende Elektrode und eine zweite, innenliegende Elektrode durch eine Festelektrolytfolie getrennt sind. Die innenliegende Elektrode ist über ein Gaszutrittsloch mit Gas aus einem Messgasraum beaufschlagbar. Um zur innenliegenden Elektrode zu gelangen, muss das Gas dabei eine Diffusionsbarriere durchdringen, über welche sich beispielsweise ein Grenzstrom des Sensorelements einstellen lässt. Die Diffusionsbarriere ist durch eine zumindest weitgehend gasdichte Abdeckschicht zumindest lokal verschlossen. Diese Abdeckschicht, welche sich beispielsweise durch ein Verdrucken einer Paste aus Zirkonoxid auf der Diffusionsbarriere, gefolgt von einem Sinterschritt, herstellen lässt, lässt sich anschließend durch gezielte Laserschnitte lokal auftrennen, so dass eine Verkürzung des Diffusionsweges bewirkt werden kann. Durch diese Verkürzung des Diffusionsweges kann der Grenzstrom des Sensorelements gezielt eingestellt werden. Ein Grund-Grenzstrom wird dabei durch einen vorderen, offenen Eingangsbereich der Diffusionsbarriere erzeugt, welcher durch die Laserschnitte gezielt erhöht werden kann.

Die hauptsächliche Herausforderung bei derartig abgleichbaren Sensorelementen, wie beispielsweise dem in DE 103 45 141 A1 gezeigten Sensorelement, bei welchen der Abgleich über ein lokales Abtragen einer Abdeckschicht erfolgt, besteht in der Erzeugung einer rissfreien, langzeitstabilen Abdeckschicht in einem für einen Abgleich offenen Abgleichsbereich oberhalb der Diffusionsbarriere. Eine derartige rissfreie, langzeitstabile Abdeckschicht setzt jedoch einen guten Verbund zwischen der Diffusionsbarriere und der Abdeckschicht voraus. Dies kann üblicherweise durch eine abgestimmte Material-/Pastenkombination für die Funktionsschichten sowie einen kontrollierten Herstellungsprozess gewährleistet werden. Üblicherweise erhalten derartige Verbundaufbauten (Schichten) bei einem Laminiervorgang einen zusätzlichen Druck, welcher vor einem Sinterschritt den gesamten Verbund weiter stabilisiert.

Bei neueren, linearen Diffusionsbarrieren-Elektrodendesigns, also Aufbauten, bei welchen die Diffusionsbarriere und die innere Elektrode in einer gemeinsamen Innenschicht angeordnet sind, wie beispielsweise in der DE 103 45 141 A1 und bei welchen ein offenes Gaszutrittsloch, welches auch als Trimmloch fungiert, vorhanden ist, wird dieser Verbund beim Laminieren jedoch nur noch teilweise durch den Laminierdruck verstärkt. Auch in vielen radialen Konstruktionen sind die Elektrode und die Diffusionsbarriere in einer Ebene angeordnet, so dass eine ähnliche Problematik auftritt. Während der anschlusskontaktseitig unter der als Pumpfolie dienenden Festelektrolytschicht liegende Abdeckschicht-Diffusionsbarriere-Bereich einem hohen Laminierdruck ausgesetzt wird, ist dies im Bereich des Gaszutrittslochs bzw. im Trimmlochbereich nicht gegeben. Durch den inhomogenen Laminierdruck auf das Sensorelement im Bereich der Bohrlochkanten wirken zusätzliche Scherkräfte, welche diesen Bereich weiter destabilisieren können und zu Spannungen und Rissen in der Abdeckschicht führen können. Derartige Spannungen und Risse können jedoch einen hohen Ausschuss bedingen oder eine hohe Streuung bezüglich des Grenzstroms (im Folgenden auch als Iₚ bezeichnet) und des k-Wertes. Der k-Wert ist dabei ein Maß für die Druckabhängigkeit des Grenzstroms und wird beispielsweise in WO2007/104621 beschrieben. Die hohe Streuung der Grenzströme wird in der Regel durch den Abgleich, beispielsweise den Laserabgleich, wieder kompensiert. Die k-Wert-Streuung lässt sich auf diese Weise jedoch in der Regel nicht kompensieren. Im Gegenteil ist sogar festzustellen, dass auch der Abgleich den k-Wert beeinflusst, da beim Abgleich das Verhältnis zwischen Gasphasen- und Knudsendiffusion verändert wird. Hierdurch wirkt die Streuung der Grenzströme über den Abgleich zusätzlich auf die Streuung der k-Werte ein. Bei einer hohen Streuung der Grenzströme muss unterschiedlich stark abgeglichen werden. Entsprechend unterschiedlich wird dabei auch der k-Wert durch den Abgleich variiert.

Die Streuung, insbesondere die Streuung der k-Werte, wird weiterhin durch Hohlräume, die den Gaszutritt zur Diffusionsbarriere gewährleisten, beeinflusst. Diese Hohlräume werden beispielsweise durch die untere Kante des Gaszutrittslochs und die Festelektrolytfolie gebildet. Dieser nur schwere produzierbare Gaszutritt zu der Diffusionsbarriere verursacht einen zusätzlichen Beitrag zur Streuung der Grenzströme und k-Werte. Für die Grenzströme hat dies eine untergeordnete Bedeutung, da dieser Grenzstrom nachträglich abgeglichen werden kann. Jedoch beeinflussen unterschiedliche Diffusionswiderstände im Eingangsbereich den k-Wert entscheidend. Bleibt der Anteil des Diffusionswiderstandes über der Diffusionsbarriere weitgehend stabil und verändert sich der Anteil des Gasphasendiffusionswiderstandes am Gesamtdiffusionswiderstand durch Verengungen im Hohlraum des Eingangsbereichs, so ändert sich der k-Wert maßgeblich. Durch den zusätzlichen Abgleich der Grenzströme wird dieser Einfluss unter Umständen noch verstärkt. Bei üblichen Designs kann der k-Wert beispielsweise in einem Bereich zwischen 0,95 und 1,25 bar schwanken.

### Offenbarung der Erfindung

Es werden daher ein Sensorelement und ein Verfahren zur Herstellung eines Sensorelements, insbesondere eines erfindungsgemäßen Sensorelements, vorgeschlagen, welche die oben beschriebenen Nachteile bekannter Verfahren und Sensorelemente zumindest weitgehend vermeiden und welche dazu beitragen, den Ausschuss und die Streuung der k-Werte stark zu vermindern. Die Erfindung geht aus von dem Grundgedanken, dass zur Ausschussvermeidung und zur Minimierung der Streuungen Risse oder Spalten in der Abdeckschicht grundsätzlich vermieden werden sollen. Daneben ist ein homogener, reproduzierbarer Gaszutritt zur Diffusionsbarriere entscheidend zur Einstellung von k-Wert-Niveaus mit geringer Streuung.

Das vorgeschlagene Sensorelement dient zur Bestimmung mindestens einer physikalischen Eigenschaft eines Gases in einem Messgasraum. Beispielsweise kann es sich hierbei um eine Bestimmung einer Gasgemischzusammensetzung handeln, beispielsweise um die Bestimmung einer Konzentration einer nachzuweisenden Gaskomponente. Insbesondere kann die Erfindung zur Bestimmung einer Sauerstoffkonzentration eingesetzt werden, beispielsweise im Abgas von Brennkraftmaschinen.

Das Sensorelement umfasst mindestens eine erste Elektrode und mindestens eine zweite Elektrode sowie mindestens einen die erste Elektrode und die zweite Elektrode verbindenden Festelektrolyten. Die zweite Elektrode ist dabei im Inneren des Sensorelements angeordnet und ist über mindestens ein Gaszutrittsloch und mindestens eine Diffusionsbarriere mit dem Gas aus dem Messgasraum beaufschlagbar. Auf der Diffusionsbarriere ist zumindest bereichsweise eine zumindest teilweise gasundurchlässige Abdeckschicht vorgesehen. Insofern kann für mögliche Ausführungsformen des Sensorelements beispielsweise auf die DE 103 45 141 verwiesen werden.

Ein Grundgedanke der vorliegenden Erfindung besteht darin, die oben beschriebenen Probleme durch eine geeignete Ausgestaltung des Gaszutrittslochs zu vermindern. Zu diesem Zweck wird vorgeschlagen, das Gaszutrittsloch im Bereich der Abdeckung zumindest teilweise mit einer Anfasung zu versehen. Unter einer Anfasung ist in diesem Zusammenhang eine Abschrägung der Kante des Gaszutrittslochs im Inneren des Sensorelements zu verstehen, welche beispielsweise rund oder konisch ausgestaltet sein kann. Besonders bevorzugt ist es, wenn das Gaszutrittsloch auf der Abdeckschicht mündet. In diesem Fall kann die Abdeckschicht im Bereich des Gaszutrittslochs zumindest teilweise entfernt sein. Die zweite Elektrode kann in mindestens einem Elektrodenhohlraum angeordnet sein, wobei die Diffusionsbarriere den Elektrodenhohlraum mit dem Gaszutrittsloch verbinden kann. Die Diffusionsbarriere kann von vornherein in mindestens einem Bereich unbedeckt von der Abdeckschicht bleiben und so einen ungehinderten Gaszutritt zu der Diffusionsbarriere ermöglichen, um einen Grund-Grenzstrom zu gewährleisten. Wie oben beschrieben, kann dieser Grund-Grenzstrom später durch zusätzliche Laserschnitte in der Abdeckschicht gezielt vergrößert werden. Der mindestens eine von vornherein vorhandene unbedeckte Bereich kann insbesondere im Bereich der Anfasung angeordnet sein, beispielsweise in einem Hohlraum, welcher durch die Anfasung mit dem Gaszutrittsloch und somit mit dem Messgasraum verbunden ist.

Die Anfasung kann insbesondere, wie oben dargestellt, als konische Anfasung ausgestaltet sein. Dabei kann die Anfasung beispielsweise einen Winkel aufweisen, welcher vorzugsweise im Bereich zwischen 0° und 70° liegt. Besonders bevorzugt ist ein Winkel im Bereich zwischen 20° und 70°. Der Anfas-Winkel α ist dabei als derjenige Winkel definiert, welcher zwischen der Seitenwand des Gaszutrittslochs, welches vorzugsweise zylindrisch ausgestaltet ist, und außerhalb der Anfasung und innerhalb des Anfasbereiches ausgebildet ist.

Das Sensorelement kann insbesondere einen Schichtaufbau aufweisen, beispielsweise einen zumindest teilweise in einem Laminierverfahren hergestellten Schichtaufbau. Dieser Schichtaufbau kann beispielsweise mindestens eine erste Elektrodenschicht mit der mindestens einen ersten Elektrode umfassen, wobei die erste Elektrode direkt oder indirekt (beispielsweise über eine Schutzschicht) dem Messgasraum zuweist. Weiterhin kann der Schichtaufbau mindestens eine Festelektrolytschicht aufweisen, welche den genannten Festelektrolyten umfasst. Weiterhin kann der Schichtaufbau mindestens eine im Inneren des Sensorelements angeordnete Innenschicht aufweisen. Unter "im Inneren" ist dabei eine Anordnung zu verstehen, bei welcher die Innenschicht durch mindestens eine Schicht von dem Messgasraum getrennt ist, beispielsweise die genannte Festelektrolytschicht. Die Innenschicht umfasst die Abdeckschicht, die Diffusionsbarriere und die zweite Elektrode. Dabei ist die Abdeckschicht in der Innenschicht über der Diffusionsbarriere angeordnet, also von der Diffusionsbarriere aus betrachtet hin zum Messgasraum. Das Gaszutrittsloch kann den Messgasraum mit der Innenschicht verbinden und, wie oben beschrieben, beispielsweise auf der Abdeckschicht münden.

Weiterhin wird ein Verfahren zur Herstellung eines Sensorelements vorgeschlagen, insbesondere eines erfindungsgemäßen Sensorelements. Bei diesem Verfahren wird, wie oben beschrieben, über der Diffusionsbarriere zumindest bereichsweise eine zumindest teilweise gasundurchlässige Abdeckschicht aufgebracht. Das Gaszutrittsloch wird im Bereich dieser Abdeckschicht angefast.

Weiterhin kann, wie oben beschrieben, zur Einstellung mindestens einer Sensoreigenschaft des Sensorelements, beispielsweise eines Grenzstroms und/oder eines k-Wertes, die Abdeckschicht teilweise entfernt werden. Dabei kann prinzipiell ein beliebiges Verfahren zum Entfernen der Abdeckschicht verwendet werden. Besonders bevorzugt ist es jedoch, wenn das Entfernen der Abdeckschicht mittels mindestens eines Laserablationsverfahrens erfolgt, beispielsweise unter Bestrahlung der Abdeckschicht durch das Gaszutrittsloch, welches dann gleichzeitig als Trimmloch dient.

Das angefaste Gaszutrittsloch kann in einer Folienschicht erzeugt werden, bevor diese Folienschicht auf den Schichtaufbau aufgebracht wird. Dabei kann insbesondere ein Bohrer verwendet werden, mit mindestens einem ersten, im Wesentlichen zylindrischen Bohrabschnitt, wobei unter "im Wesentlichen zylindrisch" auch leicht konische Verläufe akzeptabel sind, beispielsweise Verläufe mit einem Konuswinkel von nicht mehr als 5°. Weiterhin kann der Bohrer mindestens einen zweiten Bohrabschnitt umfassen, welcher im Wesentlichen konisch ist, beispielsweise mit dem oben beschriebenen Konuswinkel der Anfasung, welcher in jedem Fall größer ist als ein möglicherweise vorhandener geringer Konuswinkel des ersten Bohrabschnitts. Auf diese Weise lassen sich beispielsweise zur Sensormitte hin angefaste Gaszutrittslöcher erzeugen.

Das vorgeschlagene Sensorelement und das vorgeschlagene Verfahren weisen gegenüber bekannten Sensorelementen und bekannten Verfahren eine Vielzahl von Vorteilen auf. So lassen sich insbesondere Scherkräfte, welche an der Bohrlochkante auf den Abdeckschicht/Diffusionsbarrieren-Verbund wirken, erheblich reduzieren. Hierdurch wird der Verbund stabiler und unanfälliger gegenüber Spalten und/oder Rissen. Hierdurch wird der Ausschuss aufgrund einer zu starken Abweichung der Grenzströme minimiert, und die Ausbringung wird erhöht. Weiterhin wird der k-Wert nur noch unwesentlich oder gar nicht mehr durch Spalten und/oder Risse beeinflusst, so dass sich hierdurch auch k-Wert-Streuung erheblich reduzieren lässt. Spalte und Risse sind jedoch bei üblichen Sensorelementen Haupteinflussparameter auf die Streuung des k-Wertes. Durch die Verringerung der Streuung der Grenzströme können die Sensorelemente einheitlicher abgeglichen werden. Somit ist auch der Einfluss des Abgleiches auf den k-Wert bei allen Sensorelementen im Wesentlichen vergleichbar. Der Abgleich führt zu einem einheitlichen Offset.

Weiterhin kann die Anfasung auch einen homogeneren, reproduzierbareren Gaszutritt zu der Diffusionsbarriere bewirken. Der Diffusionswiderstand, welcher durch einen Gasphasendiffusionswiderstand im vorderen Gaszutritt bzw. Hohlraum verursacht wird, kann hierdurch reproduzierbarerer eingestellt werden. Dies ist insbesondere in dem oben beschriebenen Ausführungsbeispiel relevant, bei welchem die Diffusionsbarriere von vornherein in mindestens einem Bereich unbedeckt von der Abdeckschicht bleibt, wobei dieser mindestens eine Bereich im Bereich der Anfasung angeordnet ist. Bei genügend großer Anfasung wird der Einfluss dieses Hohlraums in dem unbedeckten Bereich minimiert bzw. gänzlich ausgeschaltet. Der k-Wert wird dann vornehmlich über die im Vergleich zu diesem vorderen Hohlraum wesentlich reproduzierbarer herstellbaren Parameter der Diffusionsbarriere und des Elektrodenhohlraums eingestellt.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: ein Ausführungsbeispiel eines dem Stand der Technik entsprechenden Sensorelements in Schnittdarstellung von der Seite; und
- Figur 2: ein Ausführungsbeispiel eines erfindungsgemäßen Sensorelements.

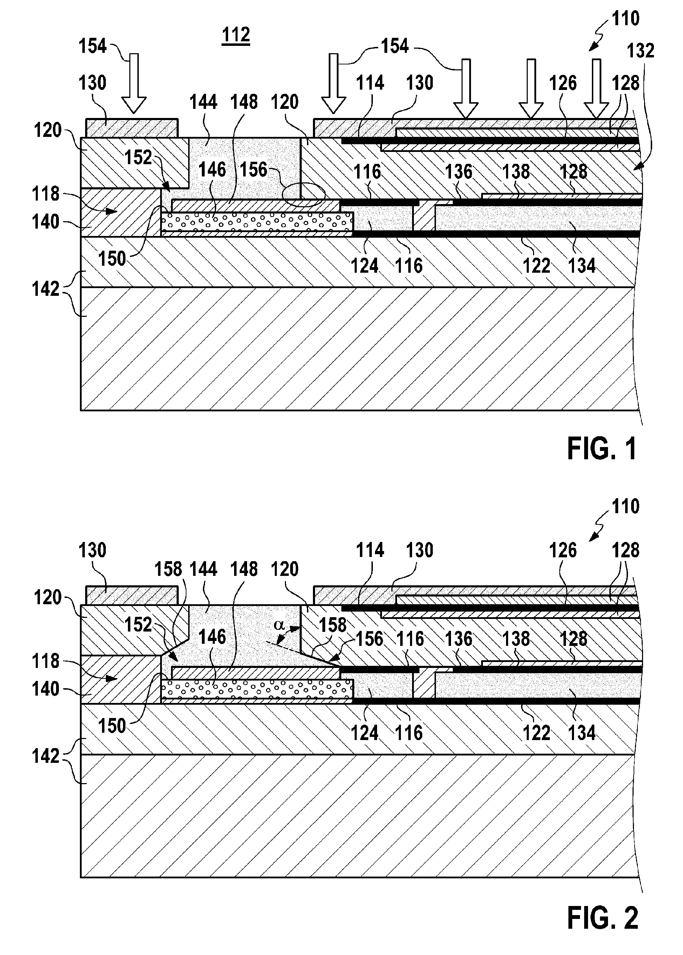

In Figur 1 ist ein Ausführungsbeispiel eines im Stand der Technik entsprechenden Sensorelements 110 in einer Schnittdarstellung von der Seite gezeigt. Das Sensorelement 110 dient in diesem Ausführungsbeispiel zur Bestimmung der Sauerstoffkonzentration und/oder des Sauerstoffpartialdrucks eines Abgases in einem Messgasraum 112. Das Sensorelement 110 ist in den Figuren lediglich schematisch dargestellt und kann über die in den Figuren dargestellten Elemente noch weitere Elemente aufweisen.

Das Sensorelement 110 weist einen Schichtaufbau auf, mit einer ersten Elektrode 114, welche dem Messgasraum 112 zuweist, und einer zweiten Elektrode 116, welche in einer Innenschicht 118 angeordnet ist. Die erste Elektrode 114 und die zweite Elektrode 116 sind durch einen Festelektrolyten 120 getrennt, welcher beispielsweise eine Zirkondioxid-Folie umfassen kann. Die zweite Elektrode 116 ist zweigeteilt, wird über eine zweite Elektrodenzuleitung 122 kontaktiert und ist im Wesentlichen innerhalb eines in der Innenschicht 118 aufgenommenen Elektrodenhohlraum 124 angeordnet. Der Elektrodenhohlraum 124 kann auch ganz oder teilweise mit einem gasdurchlässigen, porösen Material gefüllt sein.

Die erste Elektrode 114 wird über eine auf der dem Messgasraum 112 zuweisenden Seite des Schichtaufbaus des Sensorelements 110 liegende erste Elektrodenzuleitung 126 kontaktiert, welche durch eine Isolatorschicht 128 gegenüber dem Festelektrolyten 120 elektrisch abgeschirmt sein kann. Zum Messgasraum 112 hin ist die erste Elektrode 114 durch eine Schutzschicht 130 geschützt. Diese Schutzschicht 130 kann beispielsweise ein gasdurchlässiges poröses Material, wie beispielsweise ein Aluminiumoxid, aufweisen.

Die erste Elektrode 114, der Festelektrolyt 120 und die zweite Elektrode 116 bilden zusammen eine Pumpzelle 132. Weiterhin kann das Sensorelement 110 noch einen Referenzkanal 134 umfassen, welcher beispielsweise mit Außenluft als Referenzgasraum verbunden sein kann. Auch der Referenzkanal 134 kann ganz oder teilweise mit einem porösen Material gefüllt sein, beispielsweise, wie auch der Elektrodenhohlraum 124, wiederum mit einem porösen Aluminiumoxid. Innerhalb des Referenzkanals 134 kann eine Referenzelektrode 136 angeordnet sein, welche über eine Referenzelektrodenzuleitung 138 elektrisch kontaktiert werden kann. Auch diese Referenzelektrodenzuleitung 138 kann wiederum durch eine Isolatorschicht 128 gegenüber dem Festelektrolyten elektrisch isoliert sein. Mittels der Referenzelektrode 136 lässt sich beispielsweise, gemeinsam mit dem Festelektrolyten 120 und der zweiten Elektrode 116, über eine Potentialdifferenz auf eine Messgaszusammensetzung im Elektrodenhohlraum 124 schließen. Der Schichtaufbau in Figur 1 kann weiterhin zusätzliche Deckschichten 140 sowie Substratschichten 142 aufweisen.

Zur Beaufschlagung des Elektrodenhohlraums 124 mit Gas aus dem Messgasraum 112 ist ein Gaszutrittsloch 144 in der dem Messgasraum 112 zuweisenden Festelektrolytschicht 120 vorgesehen. In der Innenschicht 118 unterhalb der Festelektrolytschicht 120 ist eine Diffusionsbarriere 146 aufgenommen. Diese Diffusionsbarriere 146, welche im Bereich des Gaszutrittslochs 144 angeordnet ist, wird, wie beispielsweise in DE 103 45 141 A1 beschrieben, durch eine im Wesentlichen gasundurchlässige Abdeckschicht 148 abgedeckt. Beispielsweise kann die Diffusionsbarriere ein poröses Material eines Metalloxid umfassen, beispielsweise ein Zirkonoxid und/oder ein Aluminiumoxid. Auch die Abdeckschicht 148 kann beispielsweise beim Herstellen des Schichtaufbaus durch Verwendung beispielsweise einer Zirkonoxidpaste hergestellt werden.

In einem dem Elektrodenhohlraum 124 in diesem Ausführungsbeispiel abgewandten Bereich des Gaszutrittslochs 144 verbleibt ein unbedeckter Bereich 150 der Diffusionsbarriere 146. In diesem unbedeckten Bereich bildet sich ein Hohlraum 152 innerhalb der Innenschicht 118 aus, welcher mit dem unbedeckten Bereich 150 in Verbindung steht und welcher zum Gaszutrittsloch 144 hin offen ist. Der Hohlraum 152 bzw. der unbedeckte Bereich 150 stellen sicher, dass auch in dem in Figur 1 gezeigten Fall, in welchem noch kein Abgleich erfolgt ist, ein Gaszutritt hin zu der Diffusionsbarriere 146 erfolgen kann. Von diesem unbedeckten Bereich 150 aus kann das Gas durch die Diffusionsbarriere 146 hin in den Elektrodenhohlraum 124 diffundieren. Der Grenzstrom des Sensorelements 110 wird dann im Wesentlichen bestimmt durch die Kombination des Gasphasendiffusionswiderstandes im Bereich des Hohlraums 152, in welchem Gas von dem Gaszutrittsloch 144 zu dem unbedeckten Bereich 150 strömen muss, und dem Diffusionswiderstand innerhalb des Feststoffs der Diffusionsbarriere 146.

Wie oben beschrieben, kann nach der Herstellung des Sensorelements 110 ein Abgleich des Sensorelements erfolgen, beispielsweise um einen bestimmten Grenzstrom Iₚ und/oder einen vorgegebenen k-Wert des Sensorelements 110 einzustellen. Zu diesem Zweck kann, beispielsweise durch das Gaszutrittsloch 144 (welches dann gleichzeitig als Trimmloch dient) mittels eines Laserstrahls die Abdeckschicht 148 teilweise abgetragen werden, um den unbedeckten Bereich 150 zu vergrößern bzw. neue unbedeckte Bereiche 150 zu schaffen. Auf diese Weise kann der Weg, welchen das Gas innerhalb der Diffusionsbarriere 146 zurücklegen muss, um in den Elektrodenhohlraum 124 zu gelangen, verkürzt werden. Weiterhin kann auch die Diffusionsbarriere 146 selbst mittels Laserablation verkürzt werden. Beide Möglichkeiten sind beispielsweise in DE 103 45 141 A1 beschrieben.

Anhand des in Figur 1 dargestellten Schichtaufbaus, welcher als Beispiel eines Ausgangspunktes für die vorliegende Erfindung dienen kann, können die Schwierigkeiten dieses Standes der Technik verdeutlicht werden. Der in Figur 1 dargestellte Schichtaufbau kann beispielsweise durch ein oder mehrere Laminierschritte erzeugt werden, kombiniert beispielsweise mit einem oder mehreren Siebdruckschritten. Der Laminierdruck ist in Figur 1 symbolisch mit der Bezugsziffer 154 bezeichnet. Hierbei können jedoch die oben beschriebenen Schwierigkeiten auftreten. Eine erste Schwierigkeit liegt darin, dass der Hohlraum 152, welcher der Diffusionsbarriere 146 vorgeschaltet ist, wie oben beschrieben, einen erheblichen Einfluss auf den Diffusionswiderstand und somit auf den k-Wert haben kann. Aufgrund von Schichtdickenschwankungen der Abdeckschicht 148, der Diffusionsbarriere 146 und des Festelektrolyten 120 kann jedoch der Spalt, welcher das Gaszutrittsloch 144 mit dem Hohlraum 152 verbindet, starken Schwankungen unterworfen sein. Diese Schwierigkeiten der Reproduzierbarkeit können sich erheblich auf die Streuung der k-Werte auswirken.

Eine weitere Schwierigkeit kann in dem in Figur 1 mit der Bezugsziffer 156 bezeichneten Spannungsbereich auftreten, also am Übergang zwischen dem Gaszutrittsloch 144 und der Abdeckschicht 148 im Bereich des Elektrodenhohlraums 124. In diesem Bereich können aufgrund des Laminierdrucks 154, welcher über die Festelektrolytschicht 120 auf die Abdeckschicht 148 übertragen wird, starke Spannungen und Scherkräfte auftreten, so dass dieser Bereich besonders anfällig ist gegenüber einer Ausbildung von unerwünschten Spalten und/oder Rissen. Auch diese Spalten bzw. Risse können den k-Wert und dessen Streuung erheblich beeinflussen.

In Figur 2 ist demgegenüber ein Ausführungsbeispiels eines erfindungsgemäßen Sensorelements 110 dargestellt, welches die genannten Problematiken zumindest weitgehend vermeidet. Das Sensorelement 110 gemäß Figur 2 entspricht zunächst grundsätzlich weitgehend dem Schichtaufbau des Beispiels gemäß Figur 1. Dementsprechend kann bezüglich der Beschreibung der einzelnen Elemente weitgehend auf die obige Beschreibung der Figur 1 verwiesen werden. Im Gegensatz zu dem Ausführungsbeispiel gemäß Figur 1 ist das erfindungsgemäße Sensorelement 110 gemäß Figur 2 jedoch mit einem angefasten Gaszutrittsloch 144 ausgestattet. Dementsprechend weist das Gaszutrittsloch 144 auf seiner Innenseite, also auf seiner der Innenschicht 118 zuweisenden Seite, eine Anfasung 158 auf. Diese Anfasung ist bei dem in Figur 1 gezeigten Ausführungsbeispiel zum einen in dem Spannungsbereich 156, also am Übergang zwischen der Wand des Gaszutrittslochs 144 und der Abdeckschicht 148 im Bereich des Elektrodenhohlraums 124, und zum anderen im Bereich des Hohlraums 152 am gegenüberliegenden Ende der Abdeckschicht 148 ausgebildet. Die Anfasung 158 kann beispielsweise einen Anfaswinkel α aufweisen, welcher beispielsweise bei 70° liegen kann.

Diese Anfasung 158 kann beispielsweise mittels eines gestuften Bohrers erfolgen. Dieser gestufte Bohrer kann beispielsweise einen ersten Bohrabschnitt mit im Wesentlichen zylindrischer Gestalt umfassen, dessen Durchmesser die eigentliche Größe des Gaszutrittslochs 144 vorgeben kann. Dieser Durchmesser kann beispielsweise im Bereich von 1 mm liegen. Weiterhin kann der Bohrer mindestens einen weiteren Bohrabschnitt umfassen, welcher spitz zulaufend oder konisch ist und dessen Winkel so an den Bohrdurchmesser angepasst ist, dass eine homogene Anfasung erfolgen kann, ohne dass eine Bohrlochkante mit größerem Bohrlochdurchmesser entsteht. Auch eine andere Art der Erzeugung des Gaszutrittslochs 144 und der Anfasung 158 ist jedoch denkbar, beispielsweise eine mehrstufige Bohrung mit unterschiedlichen Werkzeugen und/oder eine Bohrung mittels eines Lasers.

Der Effekt der Anfasung 158 bewirkt eine Verbesserung im Bereich beider oben beschriebener Problematiken. Zum einen bewirkt die Anfasung 158 im Bereich des Hohlraums 152, dass der Einfluss dieses vorderen Hohlraums 152 bzw. des Spalts zwischen diesem Hohlraum 152 und dem Gaszutrittsloch 144 stark minimiert bzw. gänzlich ausgeschaltet werden kann. Der k-Wert kann dann vornehmlich über die wesentlich reproduzierbarer herstellbaren Parameter der Diffusionsbarriere (beispielsweise deren Schichtdicke und/oder Länge) und den Elektrodenhohlraum 124 eingestellt werden.

Zum zweiten wirkt sich die Anfasung 158 auch günstig in dem (ehemaligen) Spannungsbereich 156 aus. Da Spannungen, insbesondere Scherkräfte, überwiegend im Bereich scharfer, rechtwinkliger Kanten, wie dem in Figur 1 gezeigten rechtwinkligen Übergang zwischen dem Festelektrolyten 120 und der Abdeckschicht 148, auftreten können, wird durch die Anfasung 158 diese Spannung in dem Elektrodenhohlraum 124 benachbarten Bereich stark vermindert. Hierdurch wird der Verbund aus der Diffusionsbarriere 146 und der Abdeckschicht 148 insbesondere in diesem Spannungsbereich 156 stabiler und unanfälliger gegenüber Spalten und/oder Rissen. Dadurch kann der Ausschuss aufgrund zu starker Schwankungen des Grenzstromes minimiert werden. Durch die Verringerung der Streuung der Grenzströme können die Sensorelemente 110 einheitlicher abgeglichen werden. Somit ist auch der Einfluss des Abgleichs auf den k-Wert bei fast allen Sensorelementen 110 vergleichbar. Der Abgleich führt zu einem einheitlichen Offset.

## Patentansprüche

1. Sensorelement (110) zur Bestimmung mindestens einer physikalischen Eigenschaft eines Gases in einem Messgasraum (112), insbesondere zur Bestimmung einer Sauerstoffkonzentration in einem Abgas, umfassend mindestens eine erste Elektrode (114) und mindestens eine zweite Elektrode (116) und mindestens einen die erste Elektrode (114) und die zweite Elektrode (116) verbindenden Festelektrolyten (120), wobei die zweite Elektrode (116) im Inneren des Sensorelements (110) angeordnet ist und über mindestens ein Gaszutrittsloch (144) und mindestens eine Diffusionsbarriere (146) mit Gas aus dem Messgasraum (112) beaufschlagbar ist, wobei auf der Diffusionsbarriere (146) zumindest bereichsweise eine zumindest teilweise gasundurchlässige Abdeckschicht (148) vorgesehen ist, wobei das Gaszutrittsloch (144) im Bereich der Abdeckschicht (148) zumindest eine Anfasung (158) aufweist.

2. Sensorelement (110) nach dem vorhergehenden Anspruch, wobei die zweite Elektrode (116) in mindestens einem Elektrodenhohlraum (124) angeordnet ist und wobei die Diffusionsbarriere (146) den Elektrodenhohlraum (124) mit dem Gaszutrittsloch (144) verbindet.

3. Sensorelement (110) nach einem der vorhergehenden Ansprüche, wobei das Gaszutrittsloch (144) auf der Abdeckschicht (148) mündet.

4. Sensorelement (110) nach einem der vorhergehenden Ansprüche, wobei die Abdeckschicht (148) im Bereich des Gaszutrittslochs (144) teilweise entfernt ist.

5. Sensorelement (110) nach einem der vorhergehenden Ansprüche, wobei die Diffusionsbarriere (146) in mindestens einem Bereich (150) unbedeckt von der Abdeckschicht (148) ist und einen ungehinderten Gaszutritt zur der Diffusionsbarriere (146) ermöglicht, wobei der mindestens eine unbedeckte Bereich (150) im Bereich der Anfasung (158) angeordnet ist.

6. Sensorelement (110) nach einem der vorhergehenden Ansprüche, wobei die Anfasung (158) einen Winkel α aufweist, wobei 0° < α ≤ 70° ist und vorzugsweise 20° ≤ α ≤ 70° ist.

7. Sensorelement (110) nach einem der vorhergehenden Ansprüche, wobei das Sensorelement (110) einen Schichtaufbau aufweist, aufweisend mindestens eine erste Elektrodenschicht, welche die erste Elektrode (114) umfasst, wobei die erste Elektrode (114) dem Messgasraum (112) zuweist, weiterhin aufweisend mindestens eine Festelektrolytschicht, wobei die Festelektrolytschicht den Festelektrolyten (120) umfasst, und weiterhin aufweisend mindestens eine im Inneren des Sensorelements (110) angeordnete Innenschicht (118), wobei die Innenschicht (118) die Abdeckschicht (148), die Diffusionsbarriere (146) und die zweite Elektrode (116) umfasst, wobei die Abdeckschicht (148) in der Innenschicht (118) über der Diffusionsbarriere (146) angeordnet ist und wobei das Gaszutrittsloch (144) den Messgasraum (112) mit der Innenschicht (118) verbindet.

8. Verfahren zur Herstellung eines Sensorelements (110), insbesondere eines Sensorelements (110) nach einem der vorhergehenden Ansprüche, wobei das Sensorelement (110) mindestens eine erste Elektrode (114) und mindestens eine zweite Elektrode (116) und mindestens einen die erste Elektrode (114) und die zweite Elektrode (116) verbindenden Festelektrolyten (120) umfasst, wobei die zweite Elektrode (116) im Inneren des Sensorelements (110) angeordnet ist und über mindestens ein Gaszutrittsloch (144) und mindestens eine Diffusionsbarriere (146) mit Gas aus dem Messgasraum (112) beaufschlagbar ist, wobei auf die Diffusionsbarriere (146) zumindest bereichsweise eine zumindest teilweise gasundurchlässige Abdeckschicht (148) aufgebracht wird, wobei das Gaszutrittsloch (144) im Bereich der Abdeckschicht (148) angefast wird.

9. Verfahren nach dem vorhergehenden Anspruch, wobei das Sensorelement (110) einen Schichtaufbau aufweist, wobei zur Erzeugung des Schichtaufbaus ein Laminierverfahren eingesetzt wird.

10. Verfahren nach einem der beiden vorhergehenden Ansprüche, wobei zur Einstellung mindestens einer Sensoreigenschaft des Sensorelements (110), insbesondere zur Einstellung mindestens eines Grenzstroms, die Abdeckschicht (148) teilweise entfernt wird.

11. Verfahren nach dem vorhergehenden Anspruch, wobei zum Entfernen der Abdeckschicht (148) ein Laserablationsverfahren verwendet wird.

12. Verfahren nach einem der vorhergehenden Verfahrensansprüche, wobei das Gaszutrittsloch (144) in einer Folienschicht, insbesondere einer den Festelektrolyten (120) bildenden Folienschicht, erzeugt wird, wobei ein Bohrer mit mindestens einem ersten, im Wesentlichen zylindrischen Bohrabschnitt und mindestens einem zweiten, im Wesentlichen konischen Bohrabschnitt verwendet wird.
